# EUROPÄISCHE PATENTSCHRIFT

(11) **EP 2 205 957 B1**
(45) Veröffentlichungstag und Bekanntmachung des Hinweises auf die Patenterteilung: **24.04.2013**
(21) Anmeldenummer: 08845425.1
(22) Anmeldetag: 28.10.2008
(51) Int. Cl.: G01N 9/00

(54) **VERFAHREN ZUM BETREIBEN EINER DICHTEMESSVORRICHTUNG UND VORRICHTUNG ZUR DICHTEMESSUNG**
METHOD FOR OPERATING A DENSITY MEASURING APPARATUS AND APPARATUS FOR DENSITY MEASUREMENTS
PROCÉDÉ PERMETTANT DE FAIRE FONCTIONNER UN DISPOSITIF DE MESURE DE DENSITÉ, ET DISPOSITIF DE MESURE DE DENSITÉ CORRESPONDANT

(30) Priorität: 30.10.2007 DE 102007052041
(43) Veröffentlichungstag der Anmeldung: 14.07.2010
(73) Patentinhaber: Krohne AG, 4019 Basel (CH)
(72) Erfinder: HUSSAIN, Yousif, Northampton NN3 3DA (GB)
(74) Vertreter: Gesthuysen Patent- und Rechtsanwälte
(86) Internationale Anmeldenummer: PCT/EP2008/009089
(87) Internationale Veröffentlichungsnummer: WO 2009/056270

(56) Entgegenhaltungen:
- EP-A1- 1 426 741
- US-A- 4 262 523
- US-B2- 6 732 570

## Beschreibung

Die Erfindung betrifft ein Verfahren zum Betreiben einer Dichtemeßvorrichtung mit einem Meßrohr zur Bestimmung der Dichte eines Mediums, wobei das Meßrohr mit dem Medium gefüllt wird, das Meßrohr zu einer Schwingung angeregt wird, die Frequenz der Schwingung ermittelt wird und aus der ermittelten Frequenz und anderen, physikalisch-geometrische Eigenschaften des Meßrohres bestimmenden Parametern die Dichte des Mediums berechnet wird, wobei wenigstens eine mechanische Spannung des Meßrohres ermittelt wird und mit dem erhaltenen mechanischen Spannungswert der Einfluß der mechanischen Spannung des Meßrohrs und/oder der Einfluß des Drucks im Medium auf die ermittelte Dichte des Mediums - zumindest teilweise - berücksichtigt bzw. kompensiert wird bzw. werden. Darüber hinaus betrifft die Erfindung auch eine Vorrichtung zur auf Schwingungsanalyse beruhenden Dichtemessung, mit wenigstens einem Meßrohr, einem in dem Meßrohr befindlichen Medium, wenigstens einem auf das Meßrohr einwirkenden Schwingungserzeuger, wenigstens einem Meßwertaufnehmer zur Erfassung der Schwingung des Meßrohres, wenigstens einem Dehnungsmeßstreifen, durch den die mechanische Spannung meßtechnisch ermittelt wird, und mit einer Auswerteeinheit zur Auswertung der von dem Meßwertaufnehmer erfaßten Schwingung und Berechnung eines Dichtewertes des Mediums aus der erfaßten Schwingung und anderen, physikalisch-geometrische Eigenschaften des Meßrohrsbestimmenden Parametern.

Verfahren zur Messung der Dichte eines Mediums, das sich in einem Hohlkörper befindet - wie zum Beispiel in einem Meßrohr -, bei denen der von seinem Schwingungsverhalten her im wesentlichen bekannte Hohlkörper zu einer Schwingung angeregt wird und die sich ergebende Schwingung, insbesondere die Frequenz der sich ergebenden Schwingung, zur Bestimmung der Dichte des in dem Hohlkörper befindlichen Mediums herangezogen wird, sind seit langem bekannt und werden in weiter Verbreitung eingesetzt.

Wenn davon die Rede ist, daß es sich hier um ein Verfahren zum Betreiben einer Dichtemeßvorrichtung handelt, wobei das Verfahren auf dem Prinzip der Schwingungsanalyse beruht, dann sind damit alle Vorrichtungen gemeint, die sich jedenfalls auch zur Dichtemessung verwenden lassen, auch wenn sie nicht in erster Linie zur Dichtemessung vorgesehen sind. Es ist beispielsweise bekannt, eine Dichtemessung auch mit Coriolis-Massedurchflußmessern vorzunehmen, wobei derartige Massedurchflußmeßvorrichtungen auch ein Meßrohr aufweisen, das mit einem Medium gefüllt bzw. von diesem Medium durchflossen wird und das zu einer Schwingung angeregt wird, wobei jedoch zur Bestimmung des Massendurchsatzes nicht die Frequenz einer Eigenschwingung ausgewertet wird, sondern vornehmlich die Phasendifferenz zwischen zwei Abschnitten des in Schwingung befindlichen Meßrohres. Nichts desto trotz sind auch auf dem Coriolis-Prinzip basierende Massendurchflußmeßvorrichtungen grundsätzlich dazu geeignet, nach der Art einer Dichtemeßvorrichtung betrieben zu werden.

Die Dichtebestimmung beruht grundsätzlich auf der Erkenntnis, daß ein schwingfähiges mechanisches System im einfachsten Fall durch ein einfaches Feder-Masse-System mathematisch beschrieben werden kann, wobei die Eigenfrequenz dieses Systems in einem bestimmten funktionalen Zusammenhang steht zu der Masse und anderen physikalisch-geometrischen Eigenschaften des Systems, wie z. B. der Federkonstanten, durch die das relevante Verhalten der Feder im einfachsten Fall mathematisch abgebildet werden kann. Bei einem idealisierten, vollkommen linearen Feder-Masse-System entspricht die Eigenkreisfrequenz der Wurzel aus dem Quotienten von der Federkonstanten der Feder und der Gesamtmasse des Systems. Wenn die Gesamtmasse des Systems wie in dem hier betrachteten Fall aus der Masse des Meßrohres und der Masse des in dem Meßrohr befindlichen Mediums besteht, dann ist der Beitrag des in dem Meßrohr enthaltenen Mediums zu der Gesamtmasse gleich dem Produkt aus der Dichte des Mediums und dem von dem Meßrohr umfaßten Volumen, das von dem Medium ausgefüllt wird. Es ist unmittelbar einleuchtend, daß nach meßtechnischer Erfassung der Frequenz der Eigenschwingung des Hohlkörpers - hier des Meßrohres - auf die Dichte des von dem Meßrohr umfaßten Mediums geschlossen werden kann, vorausgesetzt das Volumen des Meßrohres ist bekannt.

Bei genauerem Hinsehen zeigt sich in der Praxis jedoch, daß die zuvor beschriebene modellartige Beschreibung einer Dichtemeßvorrichtung mit einem Meßrohr zur Bestimmung der Dichte eines Mediums, wobei das Meßrohr mit dem Medium gefüllt wird und das Meßrohr zu einer Schwingung angeregt wird nur eine erste und gegebenenfalls ungenügende modellmäßige Beschreibung der tatsächlichen Verhältnisse ist. So stellt sich beispielsweise heraus, daß - auch für inkompressibele Medien - die aus dem einfachen Ansatz über ein Feder-Masse-System erhaltene Dichte des Mediums auch eine Abhängigse als für die Dichtebestimmung als wesentlich erkannten Größen jedenfalls auch zu der Dichtebestimmung herangezogen werden, so daß - ausgehend von den einfacheren Modellvorstellungen - richtige Ergebnisse für die Dichte erhalten werden, folglich - in bezug auf die einfachen Modellvorstellungen - der Einfluß von mechanischer Spannung des Meßrohres und/oder der Einfluß des Drucks im Medium tatsächlich "kompensiert" bzw. korrigiert wird.

Der Einfluß der mechanischen Spannung des Meßrohres und/oder der Einfluß des Drucks im Medium auf die ermittelte Dichte des Mediums kann aber auch sofort in die Bestimmung der Dichte des Mediums eingehen, beispielsweise durch einen komplexeren modellmäßigen Ansatz, so daß diese Größen eine anfängliche Berücksichtigung erfahren und nicht der (Nach-) Korrektur dienen.

Nach einer vorteilhaften Ausgestaltung des erfindungsgemäßen Verfahrens wird der Einfluß der ermittelten mechanischen Spannung auf die mechanische Steifigkeit des Meßrohres - und damit auf die ermittelte Dichte des Mediums - berücksichtigt bzw. kompensiert. In dem oben beschriebenen einfachen Feder-Masse-System als Modell für eine Dichtemeßvorrichtung mit einem schwingfähigen Meßrohr entspricht die Federkonstante im wesentlichen der mechanischen Steifigkeit des in der Dichtemeßvorrichtung verwendeten Meßrohres. Je nach verwendeter mathematisch-physikalischer Beschreibung eines solchen Meßrohres ist die Steifigkeit des Meßrohres eine Funktion diverser physikalischer und geometrischer Parameter des Meßrohres, z. B. des Rohrinnendurchmessers und der Rohrwanddicke (geometrische Parameter) und der Poissionszahl und dem Elastizitätsmodul des Materials, aus dem das Meßrohr gefertigt ist (physikalische Parameter). Insgesamt zeigt sich jedoch, daß die mechanische Steifigkeit des Meßrohres auch abhängig ist von der in dem Meßrohr wirkenden mechanischen Spannung, was verschiedene Ursachen haben kann, wie beispielsweise eine Spannungsabhängigkeit des Elastizitätsmoduls, aber auch die in einem gekrümmten Meßrohr wirkenden Momente, die den ausgestalteten Krümmungen entgegenzuwirken versuchen.

Nach einer weiteren vorteilhaften Ausgestaltung der Erfindung wird bzw. werden als mechanische Spannung die Umfangsspannung und/oder die axiale Spannung des Rohres ermittelt. Dabei ist die Umfangsspannung - die teilweise auch als Tangentialspannung bezeichnet wird - in einem axialen Querschnitt der Meßrohrwandung wirksam, wohingegen die axiale Spannung in einem radialen Querschnitt der Rohrwahndung wirkt. Diese Normalspannungen sind erfindungsgemäß als besonders bedeutsam für die Ermittlung der Dichte des Mediums erkannt worden, weshalb auf sie ein besonderes Augenmerk gerichtet wird, im Gegensatz zu den in einer Oberfläche wirkenden Tangentialspannungen.

In bevorzugten Ausgestaltungen der Erfindung wird die interessierende mechanische Spannung durch wenigstens einen Dehnungsmeßstreifen meßtechnisch ermittelt, der vorzugsweise auf der Oberfläche des zu vermessenden Meßrohres angebracht wird und in seiner Meßrichtung Dehnungen oder Kontraktionen des tragenden Meßrohres durch Widerstandsänderungen anzeigt. Da - bei Fehlen externer Kraftbeaufschlagung des Meßrohres - eine Änderung des Umfangs und/oder der axialen Erstreckung des Meßrohres nur von dem im Medium vorherrschenden Druck abhängt, läßt sich über die Ermittlung der Umfangsspannung und/oder der axialen Spannung des Meßrohres auch ein Rückschluß ziehen auf den im Meßrohr herrschenden Druck, so daß auch eine Druckabhängigkeit der Dichte des Mediums berücksichtigt bzw. kompensiert werden kann.

Bei einem besonders bevorzugten Ausführungsbeispiel des erfindungsgemä-βen Verfahrens wird die mechanische Spannung des Meßrohres im unausgelenkten Zustand des Meßrohres erfaßt. Durch diese Maßnahme kann gewährleistet werden, daß solche mechanischen Spannungen nicht berücksichtigt werden, die auf der durch die Schwingung des Meßrohres verursachten Deformation des Meßrohres beruhen; im unausgelenkten Zustand des schwingenden Meßrohres kann in einem kleinen Zeitpunkt eine Messung der mechanischen Spannung frei von dynamischen Effekten und dadurch verursachten mechanischen Spannungskomponenten erfolgen. Wenn das schwingende Meßrohr von keiner anderen Kraft beaufschlagt wird, können in dem Augenblick des unausgelenkten Zustandes über die Erfassung der mechanischen Spannung lediglich diejenigen Komponenten der Spannung erfaßt werden, die beispielsweise auf dem im Medium des Meßrohres vorherrschenden Druck basieren. Bei einer bevorzugten Ausgestaltung des Verfahrens wird dies durch Synchronisation der Messung der mechanischen Spannung mit der Schwingung des Meßrohres über eine Phasenregelung bzw. Nachlaufsynchronisation erreicht, die häufig als Phase-Locked Loop (PLL) bezeichnet wird.

Bei einer weiteren Ausgestaltung des Verfahrens, bei dem zur Bestimmung der Dichte des Mediums sowohl die Umfangsspannung als auch die axiale Spannung des Meßrohres verwendet wird, wird tatsächlich nur die Umfangsspannung oder nur die axiale Spannung des Meßrohres meßtechnisch ermittelt, und die jeweils andere mechanische Spannung wird rechnerisch aus dem gemessenen mechanischen Spannungswert und aus physikalisch-geometrische Eigenschaften des Meßrohrs bestimmenden Parametern berechnet. Dies ist beispielsweise dadurch möglich, daß der über die Poissionszahl gegebene Zusammenhang zwischen relativer Dickenänderung zu relativer Längenänderung bei Einwirkung einer äußeren Kraft oder Spannung auf das Meßrohr ausgenutzt wird.

Die zuvor beschriebenen Verfahren werden in einer Ausgestaltung der Erfindung realisiert, indem der Einfluß der mechanischen Spannung des Meßrohres und/oder der Einfluß des Drucks im Medium auf die Dichte des Mediums durch Anwendung eines geschlossenen mathematischen Modells berücksichtigt bzw. kompensiert wird bzw. werden. In diesem Ausführungsbeispiel wird der Zusammenhang zwischen der erfaßten mechanischen Spannung des Meßrohres und/oder des erfaßten Drucks im Medium des Meßrohres und der Dichte des Mediums durch ein mathematisches Modell gleichungsmäßig formuliert, z. B. durch rein algebraische Bestimmungsgleichungen oder auch durch eine Differenzialgleichung oder ein Differenzialgleichungssystem. Bei einem anderen Ausführungsbeispiel der Erfindung wird der Einfluß der mechanischen Spannung des Meßrohres oder der Einfluß des Drucks im Medium des Meßrohres auf die Dichte des Mediums durch wenigstens eine meßtechnisch gewonnene Parameterlinie beschrieben oder eine Schar von Parameterlinien, die - je nach Anzahl der unabhängigen Größen - eine zwei- oder mehrdimensionale Kennfläche bilden. Es sind auch Ausführungsbeispiele möglich, bei denen manche der interessierenden Abhängigkeiten durch ein mathematisches Modell und andere Abhängigkeiten auf der Grundlage einer gemessenen Kennlinie berücksichtigt werden.

Aus der Praxis ist bekannt, daß Dichtemeßvorrichtungen einem Alterungsprozeß unterliegen, der sich auch dahingehend auswirken kann, daß sich aufgrund (langzeit-)veränderlicher Parameter der Zusammenhang zwischen der Spannung des Meßrohres und dem Druck des Mediums im Meßrohr und der Dichte des Mediums insgesamt ändert, so daß bei einer vorteilhaften Ausgestaltung des Verfahrens insbesondere die meßtechnisch gewonnene Parameterlinie oder das meßtechnisch gewonnene Parameterfeld zu vorbestimmbaren Zeitpunkten durch Kalibrierung ermittelt und damit aktualisiert wird, wobei es dazu nötig sein kann, daß die Dichtemeßvorrichtung in einem wohldefinierten vorbestimmten Zustand oder mehreren vorbestimmten Zuständen betrieben wird (Medium, Druck, Temperatur etc.).

Bei einer weiteren Lehre der Erfindung wird die zuvor hergeleitete und aufgezeigte Aufgabe bei der eingangs beschriebenen Vorrichtung zur auf Schwingungsanalyse beruhenden Dichtemessung dadurch gelöst, daß die Auswerteeinheit so ausgestaltet ist, daß die Auswerteeinheit eines der zuvor beschriebenen Verfahren durchführen kann. Eine besonders vorteilhafte Ausgestaltung dieser Vorrichtung liegt dann vor, wenn es sich bei der Vorrichtung um ein nach dem Coriolis-Prinzip arbeitendes Massendurchflußmeßgerät handelt, das "von Haus aus" alle Eigenschaften mitbringt, um auch eine Dichtemessung durchführen zu können.

Im einzelnen gibt es nun eine Vielzahl von Möglichkeiten, das erfindungsgemäße Verfahren zum Betreiben einer Dichtemeßvorrichtung und eine eben solche Vorrichtung zur Dichtemessung auszugestalten und weiterzubilden. Dazu wird auf die den Patentansprüchen 1 und 9 nachgeordneten Patentansprüche sowie auf die nachfolgende Beschreibung eines bevorzugten Ausfiihrungsbeispiels der Erfindung unter Bezugnahme auf die Zeichnung verwiesen. In der Zeichnung zeigen
- Fig. 1: ein schematisches dargestelltes Meßrohr mit den wichtigsten interessierenden Parametern und
- Fig. 2: die schematische Darstellung einer Vorrichtung zur Dichtemessung.

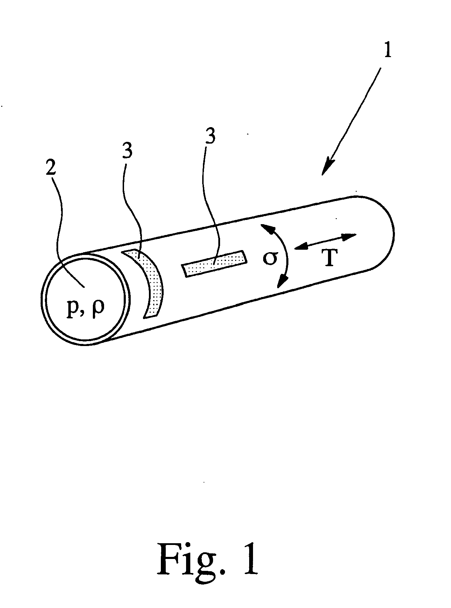

In Fig. 1 ist ein Meßrohr 1 dargestellt, wie es in einer Dichtemeßvorrichtung vorgesehen ist, die mit einem Verfahren zur Dichtemessung betrieben wird, das auf der Auswertung von Meßrohrschwingungen basiert. Das Meßrohr 1 wird dazu verfahrensgemäß mit einem Medium 2 gefüllt und zu einer Schwingung angeregt. Durch Ermittlung der sich einstellenden Frequenz der Schwingung und unter Verwendung anderer, physikalisch-geometrische Eigenschaften des Meßrohrs 1 bestimmenden Parametern wird dann die Dichte ρ des Mediums 2 des berechnet.

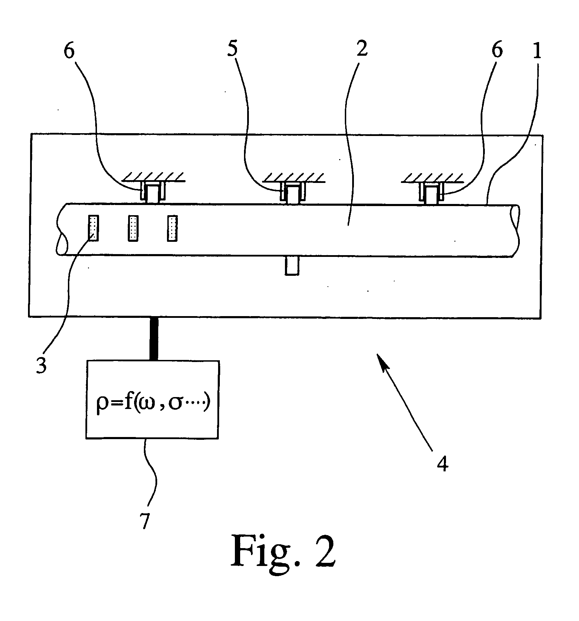

Der beschriebenen Berechnung liegt meist ein einfaches Feder-Masse-Modell des zur Schwingung angeregten Meßrohres 1 zugrunde, das im wesentlichen abhängig ist von der Masse des gesamten Systems und einer einzigen, die Schwingfähigkeit des Meßrohres charakterisierenden Größe. Derartig einfache Beschreibungen des schwingungsfähigen Systems sind oft unzureichende Beschreibungen der tatsächlichen Verhältnisse, da sie vielfältige Einflüsse nicht berücksichtigen. So ist bei dem in den Fig. 1 und 2 dargestellten Verfahren erkannt worden, daß die Dichte ρ des Mediums 2 nicht nur eine Funktion der Frequenz der sich einstellenden Eigenschwingung des angeregten Meßrohres 1 mit konstanten geometrisch-physikalische Eigenschaften beschreibenden Parametern ist, sondern daß vielmehr die Dichte ρ des Mediums 2 auch abhängig ist von der mechanischen Spannung des Meßrohres 1 und des Drucks p im Medium 2. Deshalb ist bei den in den Fig. 1 und 2 dargestellten Verfahren vorgesehen, daß wenigstens eine mechanische Spannung des Meßrohres ermittelt wird und mit dem erhaltenen mechanischen Spannungswert der Einfluß der mechanischen Spannung des Meßrohres 1 und/oder der Einfluß des Drucks p im Medium 2 auf die ermittelte Dichte ρ des Mediums 2 berücksichtigt bzw. kompensiert wird.

In dem in den Fig. 1 und 2 dargestellten Ausführungsbeispielen wird vor allem der Einfluß der ermittelten mechanischen Spannung auf die mechanische Steifigkeit des Meßrohrs 1 berücksichtigt bzw. kompensiert. Wenn berücksichtigt wird, daß auch in den einfachsten mathematisch-physikalischen Modellen (Feder-Masse-System) stets eine Abhängigkeit zwischen der mechanischen Steifigkeit des Meßrohrs 1 und der Dichte ρ des Mediums 2 besteht, dann wird deutlich, daß mit der Berücksichtigung des Einflusses der ermittelten mechanischen Spannung auf die mechanische Steifigkeit des Meßrohres 1 gleichzeitig auch der Einfluß der ermittelten mechanischen Spannung auf die zu ermittelnde Dichte des Mediums berücksichtigt bzw. kompensiert wird.

In dem Ausführungsbeispiel gemäß Fig. 1 werden als mechanische Spannung die Umfangsspannung σ und die axiale Spannung T durch jeweils einen Dehnungsmeßstreifen 3 meßtechnisch ermittelt, wobei der sich unter Dehnung und Stauchung des Dehnungsmeßstreifens 3 verändernde Widerstand des Dehnungsmeßstreifens 3 jeweils über eine nicht dargestellte Wheatstone-Brückenschaltung erfolgt. Die Dehnungsmeßstreifen 3 sind so auf dem Meßrohr 1 angebracht, daß sie Änderungen im Umfang oder in der axialen Erstreckung des Meßrohres 1 zwangsläufig nachvollziehen müssen und über die so erfaßten Stauchungen und Streckungen einen Rückschluß auf die zugrundeliegenden Spannungsänderungen in Umfangsrichtung und in axialer Richtung erlauben.

Bei der Umfangsspannung σ und der axialen Spannung T des Meßrohres 1 handelt es sich um Normalspannungen, die jeweils senkrecht zu einer Schnittfläche des Meßrohrmantels des Meßrohres 1 ausgerichtet sind; im Falle der Umfangsspannung σ wird die Querschnittsfläche durch einen parallel zur Längserstreckung des Rohres verlaufenden Schnitt in der Wandung des Meßrohres erhalten, und bei der axialen Spannung T wird die Schnittfläche durch einen senkrecht zur Längserstreckung des Meßrohres 1 verlaufenden Schnitt durch die Wandung des Meßrohres 1 erhalten. Die mechanischen Spannungen σ, T haben deshalb eine besondere Bedeutung für die Bestimmung der Dichte ρ des Mediums 2 innerhalb des Meßrohres 1, weil die mechanischen Spannungen σ, T insbesondere die Federsteifigkeit des Meßrohres 1 und damit die Eigenfrequenz beeinflussen, mit der das Meßrohr 1 schwingt; mit anderen Worten verändert sich die Eigenfrequenz der Schwingung des Meßrohres 1 bei gleichem, als inkompressibel angenommenen Medium 2 auch dann, wenn der Druck p innerhalb des Mediums 2 variiert wird, ohne daß sich an der Dichte ρ des Mediums 2 etwas ändert. Dieser Abhängigkeit wird mit der beschriebenen und dargestellten Ausgestaltung des Verfahrens Rechnung getragen.

In den Fig. 1 und 2 wird das Verfahren zum Betreiben der Dichtemeßvorrichtung so ausgeführt, daß die mechanische Spannung σ, T des Meßrohres 1 im unausgelenkten Zustand des Meßrohres 1 erfaßt wird, was deshalb von besonderem Interesse ist, weil im unausgelenkten Zustand des Meßrohres 1 der dynamische - also durch die Schwingung des Meßrohres 1 bewirkte - Anteil der mechanischen Spannung σ, T innerhalb des Meßrohres 1 bzw. innerhalb der Wandung des Meßrohres 1 einen Nulldurchgang hat, sich also im wesentlichen nur die durch den innerhalb des Mediums 2 wirkenden Druck p bewirkte Spannung bemerkbar macht. Eine solche gezielte Messung wird in den dargestellten Fällen durch Synchronisation der Messung der mechanischen Spannung σ, T mit der Schwingung des Meßrohres 1 über eine Phasenregelung bzw. eine geeignete Nachlaufsynchronisation bewirkt; derartige Regelungen werden üblicherweise als "Phase-Locked Loop" bezeichnet.

Bei dem in Fig. 2 dargestellten Verfahren wird nur die Umfangsspannung σ mit Hilfe von Dehnungsmeßstreifen 3 aufgenommen, und die axiale Spannung T innerhalb des Meßrohres 1 wird zur Korrektur des berechneten Dichtewerts p des Mediums 2 nicht berücksichtigt. Bei anderen - nicht dargestellten - Ausfiihrungsbeispielen des Verfahrens wird nur die Umfangsspannung σ oder nur die axiale Spannung T des Meßrohres 1 meßtechnisch ermittelt, und die jeweils andere mechanische Spannung - also die axiale Spannung T oder die Umfangsspannung σ - wird rechnerisch aus dem gemessenen mechanischen Spannungswert σ, T und aus physikalisch-geometrische Eigenschaften des Meßrohres 1 bestimmenden Parametern berechnet. Dies ist beispielsweise dadurch möglich, daß der Zusammenhang zwischen Längsdehnung und Querkontraktion (Poissionszahl) zusätzlich berücksichtigt wird, so daß von der einen Spannung auf die andere Spannung geschlossen werden kann.

Im Falle des in Fig. 1 dargestellten Verfahrens wird der Einfluß der mechanischen Spannung σ, T des Meßrohrs 1 und der Einfluß des Drucks p im Medium 2 auf die Dichte ρ des Mediums 2 durch Anwendung eines geschlossenen mathematischen Modells berücksichtigt. Das bedeutet, daß ein formelmäßiger Zusammenhang zwischen der Dichte ρ des Mediums 2 der erfaßten Frequenz der Schwingung des Meßrohres 1 und der erfaßten mechanischen Spannung σ, T vorhanden ist, der genau den Einfluß der mechanischen Spannung z. B. auf die Steifigkeit des Meßrohres 1 berücksichtigt, so daß insgesamt - im Vergleich mit dem vereinfachten Modell - ein besseres Ergebnis für den Dichtewert p des Mediums 2 innerhalb des Meßrohrs 1 erhalten wird. Das gleiche gilt im übrigen auch für das in Fig. 2 dargestellte Verfahren zur Dichtemessung.

Bei anderen - hier nicht dargestellten - Ausgestaltung der Erfindung liegt der Berücksichtigung des Einflusses der mechanischen Spannung σ, T des Meßrohrs 1 auf die Dichte ρ des Mediums 2 kein analytisches mathematisches Modell zugrunde, sondern es wird eine meßtechnisch gewonnene Parameterlinie, die diesen Zusammenhang widerspiegelt, bei der Bestimmung der Dichte p des Mediums 2 berücksichtigt. Der Begriff Parameterlinie ist hier nicht einschränkend als lediglich eine einzige Kurve zu verstehen, die zwischen zwei verschiedenen Größen vermittelt, sondern der Begriff ist allgemeiner zu verstehen, so daß es sich dabei auch um eine Kurvenschar von Parameterlinien oder bei Abhängigkeit von mehreren Größen um eine zwei- oder mehrdimensionale Parameterfläche handeln kann, die z. B. den Größen Eigenfrequenz der Schwingung des Meßrohres 1, Volumen des Meßrohres 1, mechanische Spannungen der Meßrohrwand σ, T einen speziellen Ausgangswert - Dichte des Mediums 2 innerhalb des Meßrohres 1 - zuordnet.

Bei den zuvor beschriebenen Ausführungsbeispielen wird die meßtechnisch gewonnene Parameterlinie oder das meßtechnisch gewonnene Kennlinienfeld, oder die gewonnene mehrdimensionale Kennlinienfläche zu vorbestimmbaren Zeitpunkten durch Kalibrierung neu ermittelt, wozu das Meßrohr 1 bzw. das Medium 2 innerhalb des Meßrohres 1 vorzugsweise in bestimmte, wohldefinierte Zustände versetzt werden muß.

In Fig. 2 ist schematisch eine gesamte Vorrichtung 4 zur auf Schwingungsanalyse beruhenden Dichtemessung dargestellt, wobei die Vorrichtung ein Meßrohr 1, ein in dem Meßrohr 1 befindliches Medium 2, einen auf das Meßrohr 1 einwirkenden Schwingungserzeuger 5 und zwei Meßwertaufnehmer 6 zur Erfassung der Schwingung des Meßrohres 1 sowie eine Auswerteeinheit 7 umfaßt. Die Auswerteeinheit 7 dient der Auswertung der von den Meßwertaufnehmern 6 erfaßten Schwingung des Meßrohres 1 und der Berechnung eines Dichtewertes p des Mediums 2 aus der erfaßten Schwingung und anderen, physikalisch-geometrische Eigenschaften des Meßrohrs 1 bestimmenden Parametern. Zur Aufnahme der Schwingungen sind auf dem Meßrohr 1 Dehnungsmeßstreifen 3 angeordnet, die eine genaue Beurteilung der Umfangsspannung σ innerhalb der Wandung des Meßrohres 1 ermöglichen. Die Auswerteeinheit 7 gestattet es, anhand der von den Meßwertaufnehmern 6 ausgegebenen Meßsignalen die Schwingung des Meßrohres 1 auszuwerten wie auch anhand der von den Dehnungsmeßstreifen 3 gelieferten Signalen die Umfangsspannung σ innerhalb des Meßrohres zu erfassen und aus den erfaßten Meßgrößen die Dichte ρ des Mediums 2 in Abhängigkeit von dem erhaltenen mechanischen Spannungswert σ und/oder dem Druck p im Medium 2 zu ermitteln.

Bei der in Fig. 2 dargestellten Vorrichtung zur auf einer Schwingungsanalyse beruhenden Dichtemessung handelt es sich um einen Massendurchflußmesser, der auf dem Coriolis-Prinzip beruht, wobei die zentralen Komponenten des Coriolis-Massendurchflußmessers nur andeutungsweise dargestellt sind; so ist beispielsweise das Meßrohr 1 nicht vollständig bis zu den Anschlußflanschen an das umgebende Rohrleitungssystem dargestellt. Ein nach dem Coriolis-Prinzip arbeitendes Massendurchflußmeßgerät bringt grundsätzlich die Möglichkeit mit, auch eine auf Schwingungsanalyse beruhende Dichtemessung eines in dem Meßrohrs befindlichen Mediums 2 durchzuführen.

## Patentansprüche

1. Verfahren zum Betreiben einer Dichtemeßvorrichtung mit einem Meßrohr (1) zur Bestimmung der Dichte eines Mediums (2), wobei das Meßrohr (1) mit dem Medium (2) gefüllt wird, das Meßrohr (1) zu einer Schwingung angeregt wird, die Frequenz der Schwingung ermittelt wird und aus der ermittelten Frequenz und anderen, physikalisch-geometrische Eigenschaften des Meßrohrs (1) bestimmenden Parametern die Dichte (p) des Mediums (2) berechnet wird, wobei wenigstens eine mechanische Spannung (σ, T) des Meßrohres (1) ermittelt wird und mit dem erhaltenen mechanischen Spannungswert der Einfluß der mechanischen Spannung (σ, T) des Meßrohrs (1) und/oder der Einfluß des Drucks (p) im Medium (2) auf die ermittelte Dichte (p) des Mediums (2) - zumindest teilweise - berücksichtigt bzw. kompensiert wird bzw. werden,
**dadurch gekennzeichnet,**
**daß** die mechanische Spannung (σ, T) des Meßrohres (1) im unausgelenkten Zustand des Meßrohres (1) erfaßt wird.

2. Verfahren nach Anspruch 1, **dadurch gekennzeichnet, daß** der Einfluß der ermittelten mechanischen Spannung (σ, T) auf die mechanische Steifigkeit des Meßrohrs (1) - und damit auf die ermittelte Dichte (p) des Mediums (2) - berücksichtigt bzw. kompensiert wird.

3. Verfahren nach Anspruch 1 oder 2, **dadurch gekennzeichnet, daß** als mechanische Spannung (σ, T) die Umfangsspannung (σ) und/oder die axiale Spannung (T) des Rohres ermittelt wird bzw. werden.

4. Verfahren nach einem der Ansprüche 1 bis 3, **dadurch gekennzeichnet, daß** die mechanische Spannung (σ, T) durch wenigstens einen Dehnungsmeßstreifen (3) meßtechnisch ermittelt wird, insbesondere durch einen Dehnungsmeßstreifen (3) in einer Wheatstone-Brückenschaltung.

5. Verfahren nach einem der Ansprüche 1 bis 4, **dadurch gekennzeichnet, daß** die mechanische Spannung (σ, T) des Meßrohres (1) im unausgelenkten Zustand des Meßrohres (1) durch Synchronisation der Messung der mechanischen Spannung (σ, T) mit der Schwingung des Meßrohres (1) über eine Phasenregelung bzw. Nachlaufsynchronisation (phase locked loop, PLL) erfaßt wird.

6. Verfahren nach einem der Ansprüche 1 bis 5, **dadurch gekennzeichnet, daß** nur die Umfangsspannung (σ) oder nur die axiale Spannung (T) des Meßrohres (1) meßtechnisch ermittelt wird und die jeweils andere mechanische Spannung (T, σ) rechnerisch aus dem gemessenen mechanischen Spannungswert (σ, T) und aus physikalisch-geometrische Eigenschaften des Meßrohrs (1) bestimmenden Parametern berechnet wird.

7. Verfahren nach einem der Ansprüche 1 bis 6, **dadurch gekennzeichnet, daß** der Einfluß der mechanischen Spannung (σ, T) des Meßrohrs (1) und/oder der Einfluß des Drucks (p) im Medium (2) auf die Dichte (p) des Mediums (2) durch Anwendung eines geschlossenen mathematischen Modells und/oder durch Anwendung wenigstens einer meßtechnisch gewonnener Parameterlinie berücksichtigt bzw. kompensiert wird bzw. werden.

8. Verfahren nach Anspruch 7, **dadurch gekennzeichnet, daß** die meßtechnisch gewonnene Parameterlinie zu vorbestimmbaren Zeitpunkten durch Kalibrierung ermittelt wird.

9. Vorrichtung zur auf Schwingungsanalyse beruhenden Dichtemessung, mit wenigstens einem Meßrohr (1), einem in dem Meßrohr (1) befindlichen Medium (2), wenigstens einem auf das Meßrohr (1) einwirkenden Schwingungserzeuger (5), wenigstens einem Meßwertaufnehmer (6) zur Erfassung der Schwingung des Meßrohres (1), wenigstens einem Dehnungsmeßstreifen (3), durch den die mechanische Spannung (σ, T) meßtechnisch ermittelt wird, und mit einer Auswerteeinheit (7) zur Auswertung der von dem Meßwertaufnehmer (6) erfaßten Schwingung und Berechnung eines Dichtewertes (ρ) des Mediums (2) aus der erfaßten Schwingung und anderen, physikalisch-geometrische Eigenschaften des Meßrohrs (1) bestimmenden Parametern,
**dadurch gekennzeichnet,**
**daß** die Auswerteeinheit (7) so ausgestaltet ist, daß die Auswerteeinheit (7) eines der Verfahren nach den Ansprüchen 1 bis 8 durchführen kann.

10. Vorrichtung nach Anspruch 9, **dadurch gekennzeichnet, daß** es sich um ein nach dem Coriolis-Prinzip arbeitendes Massendurchflußmeßgerät handelt.

## Claims

1. A method for operating a density measuring device having a measuring tube (1) for determining the density of a medium (2), with the measuring tube (1) being filled with the medium (2), the measuring tube (1) being incited to vibrate, the frequency of the vibration being determined and the density (p) of the medium (2) being calculated from the determined frequency and other parameters which determine the physical-geometrical properties of the measuring tube (1), wherein at least one mechanical stress (σ, T) of the measuring tube (1) is determined, and with the obtained mechanical stress value, the influence of the mechanical stress (σ, T) of the measuring tube (1) and/or the influence of the pressure (p) in the medium (2) on the determined density (p) of the medium (2) are or is - at least partially - taken into consideration or compensated,
**characterized in that**
the mechanical stress (σ, T) of the measuring tube (1) is measured in the non-deflected state of the measuring tube (1).

2. The method as claimed in claim 1, wherein the influence of the determined mechanical stress (σ, T) on the mechanical stiffness of the measuring tube (1) - and therefore on the determined density (p) of the medium (2) - is taken into consideration or compensated.

3. The method as claimed in claim 1 or 2, wherein the peripheral stress (σ) and/or the axial stress (T) of the tube are or is determined as the mechanical stress (σ, T).

4. The method as claimed in one of claims 1 to 3, wherein the mechanical stress (σ, T) is determined by means of measurement by means of at least one strain gauge strip (3), in particular by means of a strain gauge strip (3) in a Wheatstone bridge circuit.

5. The method as claimed in one of claims 1 to 4, wherein the mechanical stress (σ, T) of the measuring tube (1) is measured in the non-deflected state of the measuring tube (1) by synchronization of the measurement of the mechanical stress (σ, T) with the vibration of the measuring tube (1) by means of phase regulation or follow-up synchronization (phase locked loop, PLL).

6. The method as claimed in one of claims 1 to 5, wherein only the peripheral stress (σ) or only the axial stress (T) of the measuring tube (1) is determined by means of measurement, and the in each case other mechanical stress (T, σ) is calculated mathematically from the measured mechanical stress value (σ, T) and from parameters which determine physical-geometrical properties of the measuring tube (1).

7. The method as claimed in one of claims 1 to 6, wherein the influence of the mechanical stress (σ, T) of the measuring tube (1) and/or the influence of the pressure (p) in the medium (2) on the density (p) of the medium (2) are or is taken into consideration or compensated by using a closed mathematical model and/or by using at least one parameter line obtained by means of measurement.

8. The method as claimed in claim 7, wherein the parameter line which is obtained by means of measurement is determined at predeterminable times by calibration.

9. A device for density measurement on the basis of vibration analysis, having at least one measuring tube (1), a medium (2) which is situated in the measuring tube (1), at least one vibration generator (5) which acts on the measuring tube (1), at least one measured value sensor (6) for measuring the vibration of the measuring tube (1), at least one strain gauge strip (3) by which the mechanical stress (σ, T) is determined by means of measurement and having an evaluating unit (7) for evaluating the vibration measured by the measured value sensor (6) and calculating a density value (p) of the medium (2) from the measured vibration and other parameters which determine physical-geometrical properties of the measuring tube (1),
**characterized in that**
the evaluating unit (7) is designed such that the evaluating unit (7) can carry out one of the methods as claimed in claims 1 to 8.

10. The device as claimed in claim 9, wherein said device is a mass throughflow measuring unit which operates on the Coriolis principle.

## Revendications

1. Procédé pour faire fonctionner un dispositif de mesure de la densité comprenant un tube de mesure (1) pour déterminer la densité d'un fluide (2), le tube de mesure (1) étant rempli avec le fluide (2), le tube de mesure (1) étant amené en oscillation, la fréquence de l'oscillation étant déterminée et la densité (p) du fluide (2) étant calculée à partir de la fréquence déterminée et d'autres paramètres qui définissent des propriétés physico-géométriques du tube de mesure (1), au moins une tension mécanique (σ, T) du tube de mesure (1) étant déterminée et l'influence de la tension mécanique (σ, T) du tube de mesure (1) et/ou l'influence de la pression (p) dans le fluide (2) sur la densité (p) déterminée du fluide (2) étant au moins partiellement prise(s) en compte ou compensée(s) avec la valeur obtenue de la tension mécanique,
**caractérisé en ce**
**que** la tension mécanique (σ, T) du tube de mesure (1) est détectée dans l'état non déployé du tube de mesure (1).

2. Procédé selon la revendication 1, **caractérisé en ce que** l'influence de la tension mécanique (σ, T) déterminée sur la rigidité mécanique du tube de mesure (1) et ainsi sur la densité (p) déterminée du fluide (2) est prise en compte ou compensée.

3. Procédé selon la revendication 1 ou 2, **caractérisé en ce que** la tension mécanique (σ, T) déterminée est la tension périphérique (σ) et/ou la tension axiale (T) du tube.

4. Procédé selon l'une des revendications 1 à 3, **caractérisé en ce que** la tension mécanique (σ, T) est déterminée de manière métrologique par au moins une jauge extensométrique (3), notamment par une jauge extensométrique (3) dans un circuit en pont de Wheatstone.

5. Procédé selon l'une des revendications 1 à 4, **caractérisé en ce que** la tension mécanique (σ, T) du tube de mesure (1) dans l'état non déployé du tube de mesure (1) est détectée par synchronisation de la mesure de la tension mécanique (σ, T) avec l'oscillation du tube de mesure (1) par le biais d'une régulation de phase ou d'une synchronisation par poursuite (boucle à verrouillage de phase, PLL).

6. Procédé selon l'une des revendications 1 à 5, **caractérisé en ce que** seule la tension périphérique (σ) ou seule la tension axiale (T) du tube de mesure (1) est déterminée de manière métrologique et l'autre tension mécanique (T, σ) respective est calculée arithmétiquement à partir de la valeur mesurée de la tension mécanique (σ, T) et à partir de paramètres qui définissent des propriétés physico-géométriques du tube de mesure (1).

7. Procédé selon l'une des revendications 1 à 6, **caractérisé en ce que** l'influence de la tension mécanique (σ, T) du tube de mesure (1) et/ou l'influence de la pression (p) dans le fluide (2) sur la densité (p) du fluide (2) est/sont prise(s) en compte ou compensée(s) en utilisant un modèle mathématique fermé et/ou en utilisant au moins une série de paramètres obtenue de manière métrologique.

8. Procédé selon la revendication 7, **caractérisé en ce que** la série de paramètres obtenue de manière métrologique est déterminée par calibrage à des instants pouvant être prédéterminés.

9. Dispositif de mesure de la densité reposant sur l'analyse des oscillations, comprenant au moins un tube de mesure (1), un fluide (2) qui se trouve dans le tube de mesure (1), au moins un générateur d'oscillations (5) agissant sur le tube de mesure (1), au moins un enregistreur de valeur mesurée (6) pour détecter l'oscillation du tube de mesure (1), au moins une jauge extensométrique (3) par le biais de laquelle la tension mécanique (σ, T) est déterminée de manière métrologique, et comprenant une unité d'interprétation (7) pour interpréter l'oscillation détectée par l'enregistreur de valeur mesurée (6) et calculer une valeur de densité (p) du fluide (2) à partir de l'oscillation détectée et d'autres paramètres qui définissent des propriétés physico-géométriques du tube de mesure (1),
**caractérisé en ce**
**que** l'unité d'interprétation (7) est configurée de telle sorte que l'unité d'interprétation (7) peut mettre en oeuvre l'un des procédés selon l'une des revendications 1 à 8.

10. Dispositif selon la revendication 9, **caractérisé en ce qu'**il s'agit d'un appareil de mesure du débit massique fonctionnant selon le principe de Coriolis.
